# EUROPÄISCHE PATENTANMELDUNG

(11) **EP 0 742 164 A1**
(43) Veröffentlichungstag der Anmeldung: **13.11.1996**
(21) Anmeldenummer: 96106325.2
(22) Anmeldetag: 23.04.1996
(51) Int. Cl.: B65G 1/137, G06F 17/60

(54) **Verfahren und Vorrichtung zur Speicherung von Stueckgut, vorzugsweise von Kleinteilen**

(30) Priorität: 10.05.1995 CH 1344/95
(71) Anmelder: Trulec, Zvonko, 5430 Wettingen (CH)
(72) Erfinder: Trulec, Zvonko, 5430 Wettingen (CH)
(74) Vertreter: Dolder, Fritz

(57) **Zusammenfassung**

Bei der Speicherung von Stückgut, vorzugsweise von Kleinteilen, wird nach Sorten getrenntes Stückgut in einem Speichersystem auf bestimmten Lagerplätzen abgelegt. Dabei wird eine gezielte Dimensionierung der Speicherkapazität, der lagertechnischen Einrichtungen und der bau- und sicherheitstechnischen Konstruktion ermöglicht und eine bessere Raumnutzung der zur Verfügung stehenden Speicherkapazität erzielt.

Die in unregelmässigen Formen anfallenden einzulagernden Artikel werden als quaderförmige Raumeinheiten erfasst. Die räumliche Anordnung der Artikel in den ebenfalls quaderförmigen Lagerbehältern erfolgt formrein, d.h. es werden pro Sorte und pro Lagerbehälter keine topologischen Variationen zugelassen.

## Beschreibung

Die Erfindung bezieht sich auf ein Verfahren und eine Vorrichtung zur Speicherung von Stückgut, vorzugsweise von Kleinteilen, bei dem nach Sorten getrenntes Stückgut von jeweils einheitlicher Grösse, Volumen, Gewicht und Eigenschaften in einem Speichersystem auf bestimmten Lagerplätzen abgelegt wird.

Kleinteilelager sind Vorratslager für viele Artikel mit kleinem und kleinstem Volumen. Die Volumina pro Artikel betragen von 0.1 bis 100 Liter. Auf die Artikel wird zum Teil nur selten zugegriffen, so dass pro Lagerzone (Lagergasse) und Lagerbediengerät mehrere tausend Artikel zugeordnet werden können (1000 bis 20 000 Artikel pro Gasse). Die Auslagerung erfolgt in Teilmengen der Einlagerung (vgl. Heinz HEINER, Neue Trends in der Kommissioniertechnik für Kleinteilelager, in: P. RUPPER/ R.H. SCHEUCHZER (Hrsg.) Lager- und Transport-Logistik, Zürich 1988: S. 167). Lagerbetriebssysteme für derartige Kleinteilelager verfahren dabei nach dem Stand der Technik in folgenden Verfahrensschritten: Die einzelnen Artikel werden nach Kategorien sortiert, in ihre mehr oder weniger unregelmässigen Form belassen und in mehr oder weniger einheitlichen oder variablen Lagerbehältern und an mehr oder weniger einheitlichen oder variablen Speicherplätzen gespeichert. Die Speicherung erfolgt dabei chaotisch, ohne Planung der topologischen Verhältnissen, bei stapelbaren Artikeln meistens mit topologischen Kombinationen und Mischungen. Aufgrund der variablen und weitgehend -bekannten Umschlagsdynamik der einzelnen Kleinteile wird dabei die Raumnutzung intuitiv und ohne systematische Methodik vorgenommen. Dabei werden erfahrungsgemäss die Speicherkapazitäten und die baustatischen Verhältnisse mehr oder weniger intuitiv beurteilt und die Wahl der Lagertechnik (z.B. statisch, dynamisch usw.) ebenfalls weitgehend intuitiv vorgenommen.

Derartige Betriebssysteme für Kleinteilelager weisen verschiedene Nachteile auf: Die intuitive Planung und ungenügende Kontrolle des verbrauchten Raumes führt notwendigerweise zu Überkapazitäten und damit zu einer schlechten Raumnutzung, falls die Funktion des Lagers überhaupt erfüllt werden soll. Da die Lagerkapazitäten solcher bekannter Speichereinrichtungen mit fest dimensionierten Speicherplätzen möglichst nicht grösser bemessen werden, als dem üblichen durchschnittlichen Anfall an Artikeln und Artikelsorten in einer Zeiteinheit, z.B. einem Tag, entspricht, sind solche Einrichtungen bei einem überdurchschnittlich hohen Anfall an einzulagernden Artikeln, wie dies in Stosszeiten immer wieder vorkommt, schnell an den Grenzen ihrer Leistungsfähigkeit angelangt, wenn nicht zufällig im gleichen Umfang eine Auslagerung der eingelagerten Artikel stattfindet, und dies, obwohl noch nicht sämtliche Speicherplätze voll mit Artikeln der gleichen Sorte belegt sind. Andererseits kommt es nicht selten vor, dass wegen einer vorhandenen Restmenge von Artikeln auf einem Speicherplatz, die nicht mit anderen Artikeln vermischt werden kann oder soll, ein weiterer Speicherplatz mit den neu zu speichernden Artikeln belegt werden muss, ohne dass zuvor die Kapazität des ersten Speicherplatzes voll genutzt ist. Aus diesem Grund sind Lagersysteme der bekannten Art häufig erheblich überdimensioniert und verursachen daher erheblich höhere Investitionen als bei einer dem tatsächlichen Bedarf Rechnung tragenden Dimensionierung (vgl. DE-C1 40 27 874).

Aufgrund der räumlich ungeregelten, chaotischen Speicherung von Artikeln mit unregelmässigen Formen weisen derartige Lagerbetriebssysteme eine schlechte Manipulierbarkeit der einzelnen Artikel auf und bereiten daher einer Automatisierung der Be- und Entladevorgänge zusätzliche Schwierigkeiten. Die Kommissionierarbeit wird durch diese chaotische Speicherung der einzelnen Artikel erschwert.

Die räumlich ungeregelte Speicherung und dementsprechend unregelmässige Verteilung des Gewichts der eingelagerten Artikel führt daneben zu einer schlecht kalkulierbaren unregelmässigen statischen Belastung der Lagerkonstruktion, welche sowohl das Gleichgewicht statischer Lagerkonstruktionen, z.B. Palettengestelle, stören und infolge der ungleichmässigen Belastung von bewegten Lagerkonstruktionen, z.B. Paternoster-Systeme, zu entsprechend ungleichmässigem Verschleiss der bewegten Teile führen kann. Dies ist von besonderer Bedeutung, wenn Lagereinrichtungen in bereits vorhandenen Gebäuden eingerichtet werden.

Der vorliegenden Erfindung liegt daher die Aufgabe zugrunde, das gattungsgemässe Verfahren und die gattungsgemässe Vorrichtung derart auszugestalten, dass die genannten Nachteile des Standes der Technik vermieden werden können, so dass eine gezielte Dimensionierung der Speicherkapazität, der lagertechnischen Einrichtungen und der bau- und sicherheitstechnischen Konstruktion ermöglicht und eine bessere Raumnutzung der zur Verfügung stehenden Speicherkapazität erzielt wird.

Diese Aufgabe wird beim gattungsgemässen Verfahren erfindungsgemäss mit den kennzeichenden Merkmalen des Anspruchs 1 und bei der gattungsgemässen Vorrichtung erfindungsgemäss mit den kennzeichenden Merkmalen des Anspruchs 16 gelöst.

Die Erfindung wird anhand eines in den Zeichnungen dargestellten Ausführungsbeispiels näher erläutert. Es zeigt
Fig. 1 in schematischer Darstellung die Erfassung der in unregelmässigen Formen anfallenden einzulagernden Artikel als quaderförmige Raumeinheiten;
Fig. 2 in schematischer Darstellung die Anordnung der Artikel bzw. der Sammelgebinde in den Lagerbehältern;
Fig. 3 in schematischer Darstellung eine Anordnung von Lagerbehältern in einem statischen Hochregallager;
Fig. 4 eine Anordnung von Lagerbehältern in einem dynamischen Lagerbetriebssystem, beispielsweise einem Paternoster-System;
Fig. 5 in schematischer Darstellung eine automatisierte Vorrichtung zur Ausführung des erfindungsgemässen Verfahrens.

Mit dem im folgenden beschriebenen Verfahren ist es möglich, Stückgut derart in einem Speicher zu disponieren, dass der zur Verfügung stehende Speicherraum optimal genutzt, die technischen Lagereinrichtungen hinsichtlich statischen, dynamischen und sicherheitsmässigen Bedürfnissen zweckmässig ermittelt und der Raumnutzungsgrad bei gleichzeitiger Einhaltung gewichtsmässiger Ladevorschriften erhöht wird.

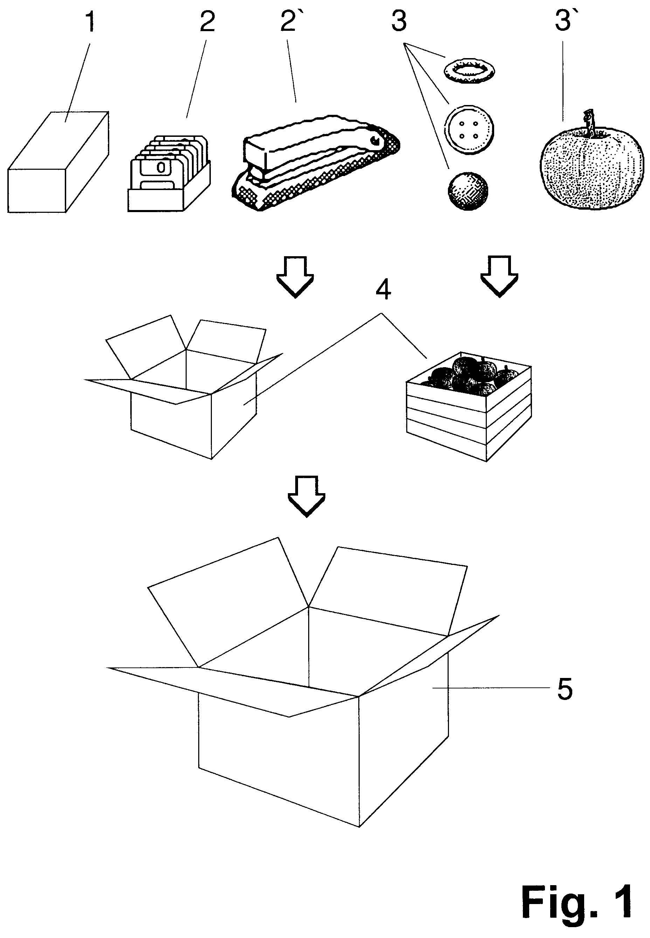

Anhand der Fig. 1 wird das Erfassen der einzulagernden Artikel als quaderförmige Raumeinheiten näher erläutert. Nach der Trennung der einzulagernden Artikel nach Sorten werden die regelmässig (1) oder unregelmässig (2, 2', 3, 3') geformten Artikel anhand ihrer grössten Dimensionen (x,y,z-Kantenlängen) in einem rechtwinkligen Koordinatensystem vermessen und für die Verwaltung erfasst. Die einzulagernden Artikel können dabei manuell oder rechnergestützt in an sich bekannter Art automatisch vermessen werden. Die Erfassung und Identifikation der einzulagernden Artikel für die Lagerbuchhaltung kann wiederum entweder manuell oder in an sich bekannter Art rechnergestützt erfolgen. Die Artikel (1) weisen dabei nur rechte Winkel (Quaderform) auf und bedürfen für die Förder- und Handlingverfahren keiner besonderen Verpackung. Die Artikel (2) stellen Einheiten dar, welche als kleinste Handlings- bzw. Verkaufseinheit bereits zusammengefasst und verpackt sind. Artikel (2'), (3) und (3'), welche keine quaderförmige sondern eine unregelmässige Form aufweisen, werden durch eine geeignete Verpackung in eine quaderförmige, ausschliesslich Winkel von 90 Grad und lineare Kanten aufweisende Raumeinheit (4) umgewandelt. Dies kann beispielsweise durch Verpacken in Faltschachteln oder Kisten aus geeignetem Material geschehen, wie bei Artikel (4) dargestellt. Entstehende Leerräume können dabei, falls erforderlich in an sich bekannter Weise durch Formkörper aus geeigneten Isolier- oder Schaumstoffen aufgefüllt werden.

Falls das Volumen der derart in quaderförmige Raumeinheiten umgewandelten Artikel (4) im Verhältnis zum eingesetzten Lagerbehälter (6) als klein erscheint, kann eine Mehrzahl von Artikeln (4) in an sich bekannter Weise zu Sammelgebinden (5) vereinigt werden, welche wiederum eine quaderförmige Raumerfüllung ausschliesslich mit Winkeln von 90 Grad und linearen Kanten aufweisen. Diese Vereinigung der einzelnen Artikel (4) zu einem Sammelgebinde (5) erfolgt vorzugsweise durch entsprechende Aufschrumpfverpackungen. Volumen und Gewicht derartiger Sammelgebinde (5) richten sich einerseits nach den Raumverhältnissen im Lagerbetrieb, insbesondere dem Volumen und der maximalen Traglast der verwendeten Lagerbehälter (6), andererseits nach der Umschlagshäufigkeit des entsprechenden Artikels und schliesslich nach den Erfordernissen der automatisierten Bedienungs- und Fördereinrichtungen, falls die Artikel nicht manuell umgeschlagen werden.

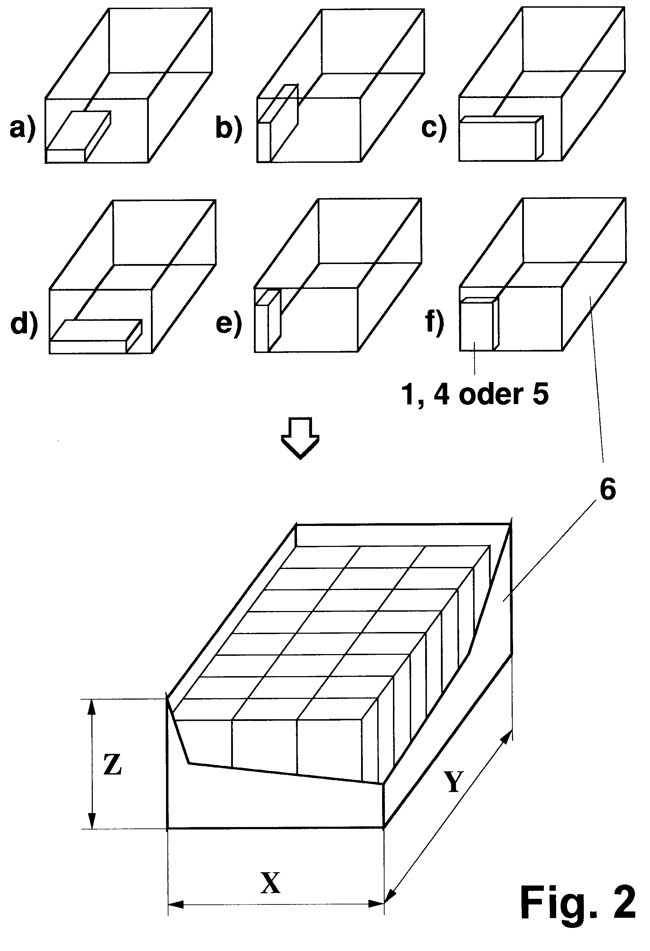

In Fig. 2 wird die Anordnung der quaderförmigen Artikel (1,4) bzw. der Sammelgebinde (5) im Lagerbehälter (6) näher dargestellt. Dieser Lagerbehälter ist ebenfalls quaderförmig ausgestaltet, weist also ebenfalls ausschliesslich Winkel von 90 Grad und lineare Kanten auf. Sein Volumen bestimmt sich einerseits nach den Raumverhältnissen am Speicherplatz, andererseits nach den Volumenverhältnissen der einzulagernden Artikel. Das Gewicht seiner Ladung hat dabei einerseits die konstruktiven Vorgaben des Lagerbehälters (6) zu berücksichtigen, andererseits die Ladevorschriften der Speicherinstallationen (Paternoster usw.) einzuhalten. Es hat sich dabei als vorteilhaft erwiesen, entweder Lagerbehälter (6) in einer einzigen Einheitsgrösse (X,Y,Z) einzusetzen, oder sich zumindest auf einige wenige, vorzugsweise zwei bis drei unterschiedliche Volumina von Lagerbehältern zu beschränken. Das Stückgut kann dabei entweder manuell oder durch an sich bekannte Handhabungsgeräte rechnergestützt in den Lagerbehältern (6) angeordnet werden.

Die räumliche Anordnung der einzelnen Artikel (1,4) bzw. der Sammelgebinde (5) im Lagerbehälter (6) erfolgt dabei formrein, d.h. es werden pro Sorte des Stückgutes und pro Lagerbehälter (6) keine topologischen Variationen zugelassen. Es hat sich erwiesen, dass die Vorteile einer derartigen formreinen Anordung der Artikel im Lagerbehälter für die Planung der Lagerkapazitäten und für das automatisierte Handling bei weitem den Nachteil überwiegen, dass bei einer gemischten topologischen Anordung des Stückgutes unter Umständen kleine Leervolumina zeitweilig mit einer geometrischen Variante ausgefüllt und dadurch für den betreffenden Artikel zeitweilig ein höherer Raumnutzungsgrad erzielt werden kann. Die optimale topologische Anordnung des Artikels im Lagerbehälter (6) wird bei vorgegebenen Dimensionen des Lagerbehälters (6) und des einzulagernden Artikels bzw. des einzulagernden Sammelgebindes (5) sowie bei vorgegebenem maximalem Raumnutzungsgrad und Traglastnutzzungsgrad durch eine Simulationsrechnung ermittelt. Diese Simulationsrechnung kann bei kleinen Speicherbetriebssystemen manuell ausgeführt werden, erfolgt indessen bei Speicherbetriebssystemen von mehreren Tausenden Artikeln für jeden einzelnen Artikel bzw. für jedes einzelne Sammelgebinde (5) rechnergestützt.

### Beispiel

Die quaderförmige Raumeinheit des Sammelgebindes (5) weist die x,y,z-Dimensionen 155 x 75 x 120 mm, entsprechend einem Artikelvolumen von v = 1395 cm³ auf, der verwendete Lagerbehälter (6) die X,Y,Z-Dimension 30 x 80 x 40 cm, entsprechend einem Volumen V = 96'000 cm³. Das Gewicht des Sammelgebindes (5) beträgt 1.2 kg. Es sind 60 Sammelgebinde (5) derart zu versorgen, dass ein Behälterraumnutzungsgrad von mindestens 70 % des zur Verfügung stehenden Behältervolumens und ein maximaler Behältertraglastnutzungsgrad erreicht wird. Die Simulationsrechnung ergibt für dieses Beispiel folgende Ergebnisse:

**TABELLE 1**

| **Bestimmung des Behälterraumnutzungsgrades** | | |
|---|---|---|
| Geometrische Anordnung | Maximale Anzahl Artikel | Raumnutzungsgrad (%) |
| a | 30 | 43 |
| b | 30 | 43 |
| c | 50 | 72 |
| d | 60 | 87 |
| e | 40 | 58 |
| f | 48 | 69 |

Die optimale topologische Anordnung ist demnach (d) mit 60 Sammelgebinden (5) und der damit erreichte Behälterraumnutzungsgrad beträgt rund 87 %.

Die Maximierung des Behältertraglastnutzungsgrades erfolgt in diesem Beispiel in folgenden Schritten: Zur Verfügung stehen Lagerbehälter aus verschiedenen Werkstoffen, welche unterschiedliche mechanische Eigenschaften aufweisen und entsprechend unterschiedliche maximale Traglasten zulassen. Das insgesamt einzulagernde Gewicht betrage 60 x 1.2 = 72 kg. Die Auswahl des Lagerbehälters (6) erfolgt anhand der Kalkulation in Tabelle 2.

**TABELLE 2**

| **Auswahl des Lagerbehälters** | | | | |
|---|---|---|---|---|
| Behälter Typ | Maximale Traglast (kg) | Traglast nutzungsgrad | Raum % nutzungsgrad % | Mittelwert % |
| Metall | 100 | 72 | 87 | 79.5 |
| Holz | 80 | 90 | 87 | 88.5 |
| Kunststoff | 30 | nicht zulässig | nicht zulässig | nicht zulässig |
| Karton | 15 | nicht zulässig | nicht zulässig | nicht zulässig |

Nach dieser Kalkulation dürfen die Sammelgebinde (5) zur Gewährleistung der Fördersicherheit nur in den Lagerbehältertypen Holz (max. Traglast 80 kg) oder Metall (max. Traglast 100 kg) gelagert werden. Von diesen beiden weist der Lagerbehältertyp aus Holz mit 90 % die bessere Traglastnutzung und dementsprechend den höheren Mittelwert (88.5 %) von Traglastnutzungsgrad und Raumnutzungsgrad auf. Der optimale Lagerbehälter ist daher in diesem Beispiel der Behältertyp aus Holz.

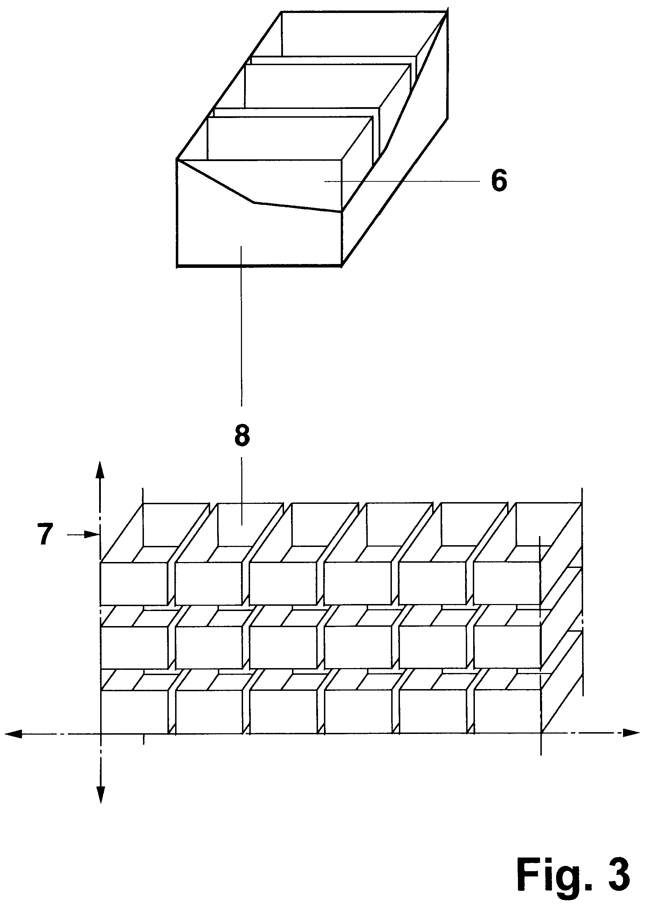

Die Anordnung der Lagerbehälter (6) in einem statischen Lagerbetriebssystem (7) ist in Fig. 3 dargestellt. Diese Anordung kann beispielsweise in einem Hochregallager von an sich bekannter Art bestehen. In diesem Betriebssystem verbleiben die eingelagerten Artikel (1,4,5) in ihren einmal zugewiesenen Behältertypen (6). Die Zuordnung der einzelnen Artikel zu ihrem Speichersystem (7), Behältertyp (6) und Lagerplatz (8) basiert auf dem Volumen, Gewicht, Umschlagsdynamik, weiterer Artikeleigenschaften und gegebenenfalls Verwaltungsvorschriften. Ändert einer dieser Parameter, so wird der Artikel neu zugeordnet.

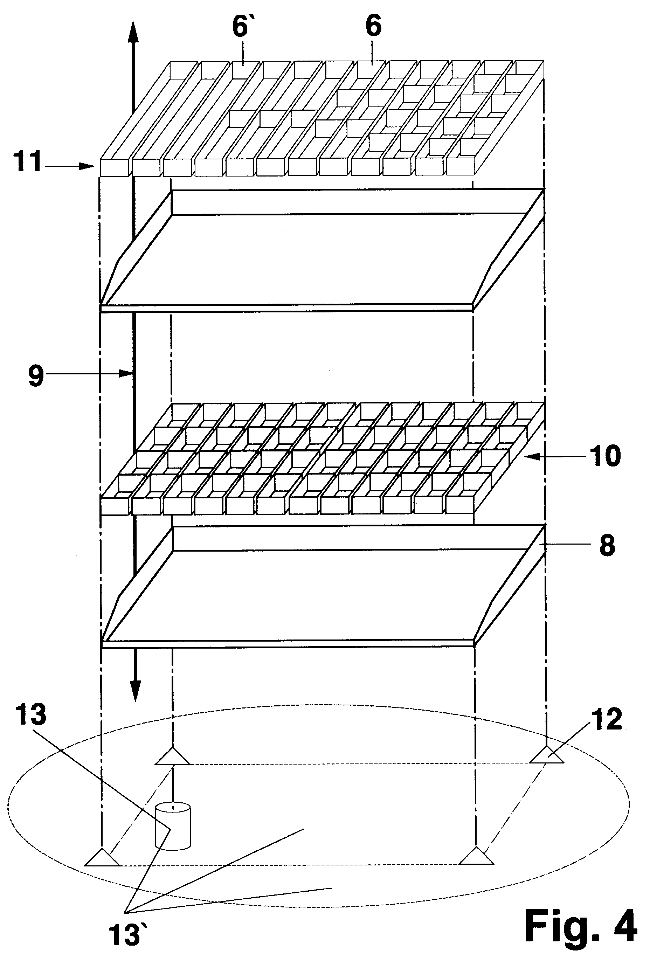

Ein Beispiel einer Anordnung der Lagerbehälter (6) in einem dynamischen Lagerbetriebssystem (7) ist in Fig. 4 dargestellt. Diese Anordnung weist ein oder mehrere Paternostersysteme (9) auf, bei dem die an einem Speicherplatz (8) eingelagerten Lagerbehälter (6) auf Tablaren mit vorgegebenen Dimensionen verschiebbar angeordnet sind und für das Be- und Entladen der Lagerbehälter an einen gewünschten Ort verschoben werden können. Die unterschiedlichen Dimensionen und Traglastwerte der einzelnen Lagerbehälter (6, 6') werden dabei durch die vorgegebene maximale Traglast der Tablare (8) und die Abmessungen der Speicher (7) begrenzt. Werden Lagerbehälter (6) von verschiedener Grösse eingesetzt, so erfolgt die Anordnung der Lagerbehälter (6, 6') auf dem Tablar (8) dabei vorzugsweise form- bzw. sortenrein, wie dies in der Anordnung (10) dargestellt ist. Werden Tablare (8) z.B. aus Gründen der Umschlagsdynamik einzelner Artikel (1, 4, 5) nicht formrein aufgefüllt, wie dies in Anordnung (11) dargestellt ist, so erfolgt die Anordnung vorzugsweise in stetiger Weise nach auf- bzw. absteigender Grösse der Lagerbehälter (6. 6'), so dass z.B. von links nach rechts auf dem Tablar (8) die Grösse der Lagerbehälter (6) stetig abnimmt.

Die erforderlichen Speicherkapazitäten für die Dimensionierung, Modellierung, Quantifizierung und Evaluation der Speicher (7) ergibt sich für alle eingelagerten Artikel in dieser Anordnung durch eine Summation der verschiedenen Lagerbehältergrössen (6, 6'). Bei bekannter Gebäudehöhe und bekannter zulässiger Bodenbelastung (12) und Flächenpressung (13) kann die Anzahl der benötigten Paternostergeräte berechnet werden. Zur Erfassung der Bodenermüdung müssen dabei die durch die Beschleunigung bzw. Abbremsung der sich im Paternoster bewegenden Massen berücksichtigt werden.

Die Auswahl der erforderlichen Speicherinstallationen (7) und die konkrete Zuteilung des geeigneten Lagerplatzes (8) innerhalb der Speicherinstallation (7) erfolgt dabei nach der vereinfachten Simulation und der Kalkulation in Tabelle 3. Diese dient insbesondere für die Gewährleistung der Einhaltung von betriebstechnischen Sicherheitsaspekten.

Die Kalkulation und vereinfachte Simulation (Fig. 2 a bzw. d) ergibt in diesem Rechenbeispiel als optimale Speicherinstallation (7) das halbautomatische Paternostersystem Z ohne Handlingshilfen (z.B. Krane), da der Artikel (leicht handhabbare Kleinteile) aufgrund des Sammelgebindegewichts < 12 kg ohne Kommissionierhilfen kommissioniert werden darf. Für das vorhandene spezifische Gewicht der einzulagernden Kleinteile genügen die statischen und mechanischen Eigenschaften des Paternoster Z und der Mittelwert zwischen Lagerplatz-Raumnutzungsgrad und Lagerplatz-Traglastnutzungsgrad ist bei dieser Installation höher als in den anderen zulässigen Installationen.

Mit der Auswahl der erforderlichen Speicherinstallation wird dem Artikel automatisch auch der zur Verfügung stehende Lagerplatz (8) mit den Abmessungen (dm) x = 5, y = 8 und z = 4 und der maximalen Traglast von 166 kg zugewiesen.

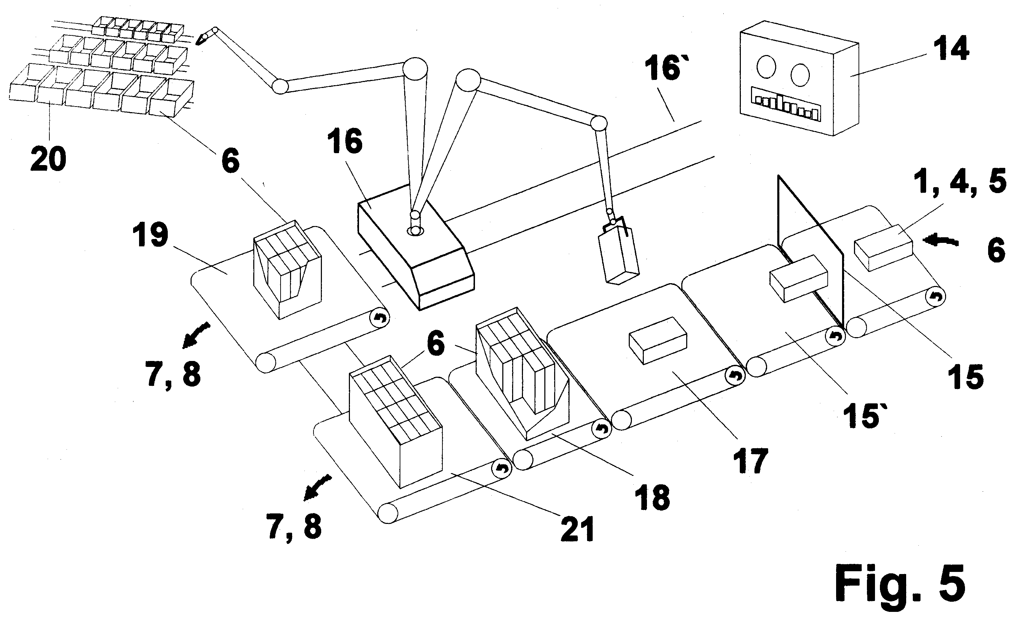

In Figur 5 ist als beispielhafte Ausführungsform der Erfindung eine automatisierte Vorrichtung zur Anwendung des erfindungsgemässen Verfahrens in schematischer Weise dargestellt. Das bereits zu quaderförmigen Raumeinheiten transformierte Stückgut (1,4) bzw. Sammelgebinde (5) wird in einer Vermessungseinrichtung (15) vermessen, durch einen Strichcodeleser identifiziert und auf einer Wägevorrichtung (15') eingewogen. Die Vermessungseinrichtung (15) ist in dieser Ausführungsform stationär angeordnet. Sie kann alternativ dazu auch mobil über entsprechendes Bedienungssystem ausgeführt werden. Diese Vermessungseinrichtung (15) kann beispielsweise elektrische oder elektronische Messysteme benutzen, beispielsweise optische Messgeräte, Lichtschranken, Sensoren, mit Ultraschall arbeitende Geräte

**TABELLE 3**

| **Auswahl der Speicherinstallation und des Lagerplatzes** | | | | | |
|---|---|---|---|---|---|
| | Lager behälter Typ: Holz | Installationen Halbautomatisch | | | Automatisch |
| | | Tablar gestell Lagerplatz | Pater noster A Lagerplatz | Pater noster Z Lagerplatz | Palettengestell Lagerplatz |
| Abmessungen (dm) | | | | | |
| x | 3 | 5 | 5 | 5 | 4 |
| y | 8 | 10 | 25 | 8 | 8 |
| z | 4 | 4 | 4 | 4 | 4 |
| Volumen (dm³) | 96 | 200 | 500 | 160 | 128 |
| Traglast (kg) | 80 | 50 | 150 | 166 | 333 |
| Maximale Belastung (kg/dm³) | .833 | .250 | .333 | 1.000 | 2.600 |
| Traglastkriterium | - | .250 < | .333 < | .833 < | .833 < |
| | | .833 | .833 | 1.000 | 2.600 |
| Entscheid | - | nicht zulässig | nicht zulässig | zulässig | zulässig |
| Geometrische Anordnung | - | nicht zulässig | nicht zulässig | a | a |
| Raumnutzungsgrad (%) | | - | - | 60 | 75 |
| Traglastnutzungstgrad (%) | - | - | - | 48.2 | 24.0 |
| Mittelwert (%) | - | - | - | 54.1 | 49.5 |
| Auswahl | - | - | - | Paternoster Z | - |

oder ähnliches. Diese Messysteme erfassen das quaderförmige Stückgut (1, 4, 5) anhand seiner Kantenlängen in den Raumkoordinaten x,y,z. Sie können die Information über das einzulagernde Stückgut unmittelbar an einen Rechner (14) abgeben. Alternativ dazu kann das kennzeichnende Signal auch manuell erfasst und an eine Be-/Entladestation (18) weitergegeben werden.

Aufgrund der Vorgaben, wie Artikelvolumen, -gewicht, maximale Traglast und Abmessungen des Lagerbehälters (6) und der Speicherinstallationen (7) ermittelt der Rechner (14) die jeweilige topographische Anordnung der Artikel im Lagerbehälter (6), die erforderliche Anzahl Lagerbehälter (6), die Speicherinstallation (7) und den geeigneten Lagerplatz (8) nach der beschriebenen Simulations- und Kalkulationsmethode und gibt die notwendigen Informationen über eine Schnittstelle an die Be-/Entladestation (18) und die Fördereinrichtung weiter. Alternativ dazu können diese Werte auch manuell berechnet und an die Beladestation (18) weitergegeben werden.

An der Schnittstelle des Rechners (14) ist mindestens ein Handhabungsgerät (16) angeschlossen, an das die optimale topographische Lage des Stückgutes (1, 4, 5) und der ausgewählte Lagerbehälter (6) ausgegeben wird. Dieses Handhabungsgerät (16) ist vorzugsweise ein Roboter, der entweder stationär oder mobil eingesetzt werden kann.

Das vermessene, gewogene und identifizierte Stückgut (1, 4, 5) gelangt über Förderbänder (17) oder andere geeignete Fördereinrichtungen zur Be-/Entladestation (18), wo es nach Angaben des Rechners (14) vom Handhabungsgerät (16) in die Lagerbehälter (6) eingelagert wird, welche vorgängig aus einem Leerbehälterpool (20) herbeigeführt worden sind. Diese Lagerbehälter (6) können ihrerseits rechnergesteuert bewegt, namentlich ein- und ausgefahren werden. Die beladenen Lagerbehälter (6) werden über ein weiteres Förderband (19) oder (21) an den vorbestimmten Speicher (7) und den vorbestimmten Lagerplatz (8) verbracht.

Alternativ dazu kann das Handhabungsgerät (16) auf einem Schienensystem (16') bewegbar angeordnet sein und das vermessene und gewogene Stückgut (1, 4, 5) in die stationär in einem Regalsystem (20) angeordneten Lagerbehälter (6) ein- und auslagern.

## Patentansprüche

1. VERFAHREN zur Speicherung von Stückgut, vorzugsweise von Kleinteilen, bei dem nach Sorten getrenntes Stückgut von jeweils einheitlicher Grösse, Volumen, Gewicht und Eigenschaften in einem Speichersystem auf bestimmten Lagerplätzen abgelegt wird, dadurch gekennzeichnet, dass
(a) das einzulagernde, sortierte Stückgut vermessen wird,
(b) das Stückgut entsprechend seinen grössten xyz-Abmessungen als quaderförmige Raumeinheit für die Verwaltung erfasst wird,
(c) nicht quaderförmiges Stückgut durch Verpackung in eine quaderförmige Raumeinheit (4) umgewandelt wird,
(d) eine Vielzahl von quaderförmigen Lagerbehältern (6) zur Aufnahme des Stückgutes eingesetzt wird,
(e) das Stückgut formrein ohne topologische Kombinationen in den Lagerbehältern (6) angeordnet wird,
(f) die topographische Anordnung des Stückgutes im Lagerbehälter (6) aufgrund einer Simulationsrechnung derart ausgewählt wird, dass der Raumnutzungsgrad im Lagerbehälter (6) maximiert wird.

2. Verfahren nach Anspruch 1, dadurch gekennzeichnet, dass zur Aufnahme der Lagerbehälter (6) eine Vielzahl von Speicherinstallationen (7) eingesetzt wird, welche quaderförmige Lagerplätze (8) aufweisen.

3. Verfahren nach Anspruch 1 und 2, dadurch gekennzeichnet, dass die Anordnung des Stückgutes im Lagerbehälter (6) aufgrund einer Simulationsrechnung derart ausgewählt wird, dass der Traglastnutzungsgrad im Speichersystem unter Einhaltung von Vorgaben der Speicherinstallationen maximiert wird.

4. Verfahren nach einem der Ansprüche 1 bis 3, dadurch gekennzeichnet, dass die Anordnung der Lagerbehälter (6) am Lagerplatz (8) aufgrund einer Simulationsrechnung derart ausgewählt wird, dass der Traglastnutzungsgrad im Speichersystem unter Einhaltung von Vorgaben der Speicherinstallationen maximiert wird.

5. Verfahren nach einem der Ansprüche 1 bis 4, dadurch gekennzeichnet, dass jeweils eine Mehrzahl von identischem Stückgut zu einem quaderförmigen Sammelgebinde (5) vereinigt wird, und dieses Sammelgebinde (5) vermessen und entsprechend seinen xyz-Abmessungen erfasst wird.

6. Verfahren nach einem der Ansprüche 1 bis 5, dadurch gekennzeichnet, dass Lagerbehälter (6) von einer einheitlichen Grösse eingesetzt werden.

7. Verfahren nach einem der Ansprüche 1 bis 6, dadurch gekennzeichnet, dass Lagerbehälter (6) vorzugsweise von zwei bis drei einheitlichen Grössen eingesetzt werden.

8. Verfahren nach einem der Ansprüche 1 bis 7, dadurch gekennzeichnet, dass der Raumnutzungsgrad im Lagerbehälter (6) insgesamt mindestens 70 % des zur Verfügung stehenden Raumes beträgt.

9. Verfahren nach einem der Ansprüche 1 bis 8, dadurch gekennzeichnet, dass das Stückgut rechnergestützt automatisch vermessen wird.

10. Verfahren nach einem der Ansprüche 1 bis 9, dadurch gekennzeichnet, dass das Stückgut rechnergestützt automatisch identifiziert wird.

11. Verfahren nach einem der Ansprüche 1 bis 10, dadurch gekennzeichnet, dass als Messgrössen bei unregelmässig geformtem Stückgut (2, 3) die xyz-Kantenlängen des zu einer quaderförmigen Raumeinheit (4) umgewandelten Stückgutes verwendet werden.

12. Verfahren nach einem der Ansprüche 1 bis 11, dadurch gekennzeichnet, dass das Stückgut (1, 4) und die Sammelgebinde (5) manuell in den Lagerbehältern (6) angeordnet werden.

13. Verfahren nach einem der Ansprüche 1 bis 12, dadurch gekennzeichnet, dass das Stückgut (1, 4) und die Sammelgebinde (5) mittels eines Handhabungsgeräts (16) in den Lagerbehältern (6) angeordnet werden.

14. Verfahren nach einem der Ansprüche 1 bis 13, dadurch gekennzeichnet, dass die optimale topographische Anordnung des Stückguts (1, 4) und der Sammelgebinde (5) in den Lagerbehältern (6) rechnergestützt ermittelt wird.

15. Verfahren nach einem der Ansprüche 1 bis 13, dadurch gekennzeichnet, dass die optimale topographische Anordnung des Stückguts (1, 4) und der Sammelgebinde (5) in den Lagerbehältern (6) manuell ermittelt wird.

16. VORRICHTUNG zur Durchführung des Verfahrens nach einem der Ansprüche 1 bis 15, dadurch gekennzeichnet, dass
(a) sie mindestens einen Rechner (14) zur Verarbeitung der das quaderförmig transformierte Stückgut (1, 4, 5) kennzeichnenden Information aufweist,
(b) der Rechner (14) wenigstens eine Schnittstelle zur Ausgabe einer die jeweilige topographische Anordnung des quaderförmig transformierten Stückgutes in jeweils wenigstens einem Lagerbehälter (6) kennzeichnenden Information.

17. Vorrichtung nach Anspruch 16 , dadurch gekennzeichnet, dass sie mindestens eine stationär angeordnete Vermessungseinrichtung (15) aufweist.

18. Vorrichtung nach Anspruch 17, dadurch gekennzeichnet, dass sie mindestens eine mobil angeordnete Vermessungseinrichtung aufweist.

19. Vorrichtung nach einem der Ansprüche 16 bis 18, dadurch gekennzeichnet, dass die Vermessungseinrichtung (15) elektrische oder elektronische Messysteme aufweist, wie optische Messgeräte, Lichtschranken, Sensoren, mit Ultraschall arbeitende Geräte und dergleichen.

20. Vorrichtung nach einem der Ansprüche 16 bis 19, dadurch gekennzeichnet, dass die Messysteme das Stückgut (1, 4, 5) nach seinen Kantenlängen in den drei Raumkoordinaten (x,y,z) erfassen.

21. Vorrichtung nach einem der Ansprüche 16 bis 20, dadurch gekennzeichnet, dass die Vermessungseinrichtung (15) an den Rechner (14) angeschlossen ist.

22. Vorrichtung nach einem der Ansprüche 16 bis 21, dadurch gekennzeichnet, dass sie mindestens eine stationär angeordnete Wägeeinrichtung (15') aufweist.

23. Vorrichtung nach Anspruch 22, dadurch gekennzeichnet, dass die Wägeeinrichtung (15') an den Rechner (14) angeschlossen ist.

24. Vorrichtung nach einem der Ansprüche 16 bis 23, dadurch gekennzeichnet, dass an eine Schnittstelle des Rechners (14) mindestens ein Handhabungsgerät (16) zur Be- und Entladung des Stückgutes (1, 4, 5) in die Lagerbehälter (6) angeschlossen ist.
